# EUROPÄISCHE PATENTSCHRIFT

(11) **EP 2 464 614 B1**
(45) Veröffentlichungstag und Bekanntmachung des Hinweises auf die Patenterteilung: **12.10.2016**
(21) Anmeldenummer: 10742156.2
(22) Anmeldetag: 12.08.2010
(51) Int. Cl.: C05F 11/02, C05F 11/06

(54) **SYSTEME UND VERFAHREN ZUR ERZEUGUNG VON BIOGAS UND BIOKOHLE SOWIE ZUR VEREDELUNG DER BIOKOHLE**
METHOD AND SYSTEM FOR THE MANUFACTURE OF COAL PARTICLES ENRICHED WITH MINERALS
PROCÉDÉ ET DISPOSITIF DE FABRICATION DE PARTICULES DE CHARBON ENRICHIES AVEC DES MATIÈRES MINÉRALES

(30) Priorität: 12.08.2009 EP 09167724
(43) Veröffentlichungstag der Anmeldung: 20.06.2012
(73) Patentinhaber: Leibniz-Institut für Agrartechnik Potsdam-Bornim e.V. (ATB), 14469 Potsdam (DE)
(72) Erfinder: MUMME, Jan, 14469 Potsdam (DE); LINKE, Bernd, 14469 Potsdam (DE); TÖLLE, Rainer, 10115 Berlin (DE)
(74) Vertreter: Müller & Schubert
(86) Internationale Anmeldenummer: PCT/EP2010/061794
(87) Internationale Veröffentlichungsnummer: WO 2011/018505

(56) Entgegenhaltungen:
- EP-A- 1 739 067
- EP-A- 1 818 383
- WO-A2-2008/138637
- DE-A1- 3 308 734
- DE-A1- 3 531 605
- DE-A1- 10 013 779
- DE-B3-102007 012 112
- DE-C1- 3 724 666
- JP-A- 11 106 751

## Beschreibung

Die vorliegende Erfindung betrifft ein Verfahren und eine Vorrichtung zur Herstellung von Biogas und Biokohle, die Verwendung der Biokohle zur Effizienzsteigerung der Biogasanlage sowie die Aufbereitung der Biokohle zu einem mineralstoffangereicherten Bodenhilfsstoff, geträgerten Mineraldünger oder einem Kultursubstrat.

In Biogasanlagen werden unterschiedliche Materialien wie organische Abfallstoffe, tierische Exkremente oder pflanzliche Biomassen, über den biologischen Prozess der Fermentation zur Erzeugung eines energiereichen, methanhaltigen Gasgemisches genutzt. Ein prinzipieller Nachteil der Biogaserzeugung ist der Umstand, dass die Eingangsmaterialien üblicherweise nur zu einem geringen Anteil in den eigentlichen Wertstoff, das Methan, gewandelt werden. Nicht abgebaute organische Substanz, Mineralien und Wasser bleiben entweder in Form von festen oder flüssigen Gärresten zurück oder werden als Begleitgase des Methans, wie u. a. CO₂, H₂S und NH₃, ausgetragen. Die Entsorgung oder Aufbereitung dieser Stoffe ist zum Teil mit hohem Aufwand verbunden und mindert dadurch die wirtschaftliche Effizienz der Biogasanlage. Hohe Konzentrationen an bestimmten mineralischen und nicht abgebauten organischen Stoffen können zudem die technische und biologische Funktion der Biogasanlage erheblich beeinträchtigen. Dies gilt insbesondere für die Elemente Schwefel und Stickstoff sowie für bestimmte organische Säuren wie flüchtige Fettsäuren und Huminsäuren.

Während die nicht zu Methan konvertierten Bestandteile der Biomasse aus Sicht der Biogaserzeugung zum Großteil behandlungsbedürftige Reststoffe darstellen, sind dies gleichzeitig auch potenzielle Wertstoffe, insbesondere für die landwirtschaftliche Produktion. So ist die Verfügbarkeit von Wasser, mineralischen Nährstoffen und CO₂ essentielle Voraussetzung für das Pflanzenwachstum. Die Nachlieferung oder Neubildung organischer Substanz, insbesondere von Huminstoffen, ist entscheidend für den Erhalt der Bodenfruchtbarkeit.

Es sind verschiedene Verfahren zur Behandlung und Verwertung der in der Biogasanlage nicht zu Methan abgebauten Biomassebestandteile bekannt. Stoffseitig basieren sie entweder auf der gasförmigen, flüssigen oder festen Phase des Biogasprozesses.

Behandlung der Gasphase Das primäre Ziel der Behandlung des in der Biogasanlage gebildeten Biogases ist die Konditionierung für die spätere Gasnutzung. Die direkte energetische Nutzung des gewonnenen Rohgases ist wegen verschiedener im Gas vorhandener biogasspezifischer Inhaltsstoffe wie z. B. Schwefelwasserstoff in der Regel nicht möglich. Das Biogas wird aus diesem Grund einer Reinigung unterzogen, die als Voraussetzung für die Nutzung betrachtet wird. Im Wesentlichen lassen sich zwei Nutzungsformen unterscheiden, die lokale energetische Nutzung sowie die Aufbereitung zum Erdgas-Substitut. Während für die direkte energetische Nutzung in der Regel nur eine Entwässerung und Entschwefelung durchgeführt wird, muss für das Erreichen der Erdgasqualität ein Großteil des Kohlendioxids abgeschieden werden.

Bei der Entschwefelung kommen unterschiedliche Verfahren zum Einsatz. Unterschieden werden kann zwischen biologischen, chemischen und physikalischen Entschwefelungsverfahren.

Die biologische Entschwefelung kann sowohl im Fermenter als auch außerhalb des Fermenters durchgeführt werden. Zur Durchführung der biologischen Entschwefelung müssen Sauerstoff und das Bakterium *Sulfobacter oxydans* vorhanden sein. Das Bakterium wandelt Schwefelwasserstoff in der Gegenwart von Sauerstoff in elementaren Schwefel um. Hierzu muss Sauerstoff oder Luft in den Reaktor gepumpt werden. Zu den Nachteilen dieses Verfahrens gehören unter anderem die natürliche Trägheit des biologischen Systems verbundenen mit einem Effizienzrückgang bei schwankenden Zuflüssen an Schwefelwasserstoff, eine verstärkte Korrosionsgefahr durch Bildung von Schwefelsäure oder schwefliger Säure und die Abhängigkeit der Reinigungsleistung von natürlicherweise schwankenden Milieubedingungen für die Schwefelbakterien (Temperatur, Nährstoffe, pH-Wert, Hemmstoffkonzentrationen).

Die chemische Reinigung des Biogases kann unter kontrollierten Bedingungen außerhalb des Fermenters durchgeführt werden, z.B. durch den Einsatz von Eisensalzen oder Natriumhydroxid. Dadurch steigt im Vergleich zur biologischen Entschwefelung die potenzielle Abscheiderate für Schwefelwasserstoff. Nachteile sind der zusätzliche Aufwand an Chemikalien sowie der höhere Wartungsaufwand. Zu den physikalische Methoden der Biogasreinigung gehören die Anwendung von Druck- und Temperaturwechseln (z.B. GB-A 692 804 und GB-A 734 577) sowie der Einsatz von Adsorbenzien wie Aktivkohle (z.B. EP-A 0 345 862) oder verschiedenen mineralischen Materialien (z.B. WO-A 2009/125004). Hierdurch können sehr hohe Abscheidegrade erzielt werden. Aufgrund der vergleichsweise hohen Betriebskosten für Energie und Filtermaterialien sind physikalische Reinigungsverfahren in Biogasanlagen jedoch kaum wirtschaftlich einsetzbar.

Behandlung der Flüssigphase Ziele der Behandlung der Flüssigphase der Biogasanlage sind die Eliminierung gelöster Hemmstoffe, die den Biogasprozess beinträchtigen können, die Veredelung gelöster mineralischer Stoffe zu einem handelsfähigen Dünger, die Gewinnung von aufbereitetem Wasser zur weiteren Verwertung oder vereinfachten Entsorgung, die Abtrennung von suspendierten Feststoffen zur weiteren Verwertung.

Eine Reihe von organischen oder mineralischen Stoffen, die entweder über die Eingangsmaterialien in Biogasanlagen gelangen oder in der Anlage selbst gebildet werden, besitzen eine potenzielle Hemmwirkung auf die hier aktiven Mikroorganismen. Hierzu gehören insbesondere Schwefelwasserstoff, Ammonium und Ammoniak sowie flüchtige Fettsäuren und Huminsäuren. Schwefelwasserstoff kann entsprechend dem Stand der Technik durch die Zugabe von Eisensalzen in den Fermenter chemisch gebunden werden. In Bezug auf Ammonium und Ammoniak sind unterschiedliche technische Lösungen zur Elimination bekannt. Zum Stand der Technik gehört, dass Ammoniak über eine physikalische Strippung abgeführt wird (z.B. DE-A 102005017077, DE 60114863 T2, DE-A 102006015496), während Ammonium durch Zugabe von Chemikalien, z.B. Magnesiumsalz oder Magnesiumoxid, ausgefällt (z. B: DE-A 10205950) oder durch Adsorbenzien, wie z. B. Zeolithe (EP-A 1 577 269) sowie Aktivkohle und Glaukonite (Hansen, K. H.; Angelidaki, I. & Ahring, B. K. (1999): Improving thermophilic anaerobic digestion of swine manure. Water Res. 33: 1805-1810).

Eine gleichzeitige Gewinnung von Düngemitteln im Zuge der Mineralieneliminierung beschreiben unter anderem DE 60114863 T2 und DE-A 102006015496. Das für die Stickstoffentfernung aus Gülle und Gärresten entwickelte ANA-Strip-Verfahren (GNS (2008): Gesellschaft für Nachhaltige Stoffnutzung mbH, Halle/Saale, www.GNS-Halle.de) sieht vor, dass bei max. 80°C und leichtem Unterdruck aus dem Strippbehälter ein ammonikhaltiges Kreislaufgas entsteht, das in einem Vorlagebehälter mit einem Adsorptionsmittel unter Bildung von Ammoniumsulfat reagiert. Als Adsorptionsmittel wird REA-Gips eingesetzt, der sich mit Ammoniak, Kohlendioxid und Wasser zu Kalziumcarbonat und Ammoniumsulfat als Stickstoffdünger umsetzt. Nachteilig wirkt sich bei diesen Verfahren entweder der kostenintensive Einsatz von Chemikalien bzw. Absorbenzien oder der energetische Aufwand aus.

Die weitergehende Aufbereitung der Flüssigphase bis hin zu trinkbaren Wasser ist prinzipiell beschrieben. Derzeit verfügbare Verfahren wie die Ultrafiltration und Umkehrosmose sind jedoch mit sehr hohen Kosten für Anschaffung und Betrieb verbunden, so dass der Einsatz an Biogasanlagen kaum wirtschaftlich dargestellt werden kann.

Behandlung der festen Phase Grundsätzlich bestehen zwei Möglichkeiten wie neben der Flüssigphase der Biogasanlage eine zusätzliche Feststoffphase erzeugt werden kann. Zum einen kann in bestimmten Biogasanlagen durch eine hier stattfindende spontane Phasenseparation die feste und flüssige Phase separat entnommen werden, zum anderen kann der Fermenterinhalt maschinell in eine feste und flüssige Phase getrennt werden.

Ziele der zusätzlichen Erzeugung und Behandlung einer festen Phase sind zum einen die Möglichkeit mit Hilfe der in ihr enthaltenen Wertstoffe eine zusätzliche Wertschöpfung zu erzielen und zum anderen die Reduzierung des Nachbehandlungsaufwands für die Flüssigphase. Für die feste Phase sind unterschiedliche Nutzungsformen Stand der Technik. Hierzu gehören die energetische Verwertung durch Verbrennung, die stoffliche Verwertung als Kultursubstrat oder organischer Dünger. Nachteil der alleinigen thermischen Nutzung ist der relativ geringe energetische Gesamtwirkungsgrad, der auf der Notwendigkeit einer hochgradigen Entwässerung der festen Phase beruht. Nachteil der alleinigen stofflichen Verwertung, ist entweder der relativ hohe energetische Aufwand für eine mechanische Aufbereitung oder die Entstehung gasförmiger Materialverluste durch eine biologische Aufbereitung. Vorteilhaft können daher Mischformen aus beiden Nutzungsvarianten sein.

Eine kombinierte stoffliche und energetische Nutzung von Biomassen wird durch den Prozess der thermochemischen Karbonisierung ermöglicht. Dabei wird potentiell nutzbare Wärme erzeugt und es bleibt ein kohleähnliches Produkt zurück, das als Biokohle bezeichnet wird. Mit der bedingt durch Wasserabspaltung erhöhten Energiedichte ist die Biokohle prinzipiell als Brennstoff geeignet und wird auch entsprechend eingesetzt. Da die Biokohle auch eine relativ hohe Sorptionsfähigkeit und eine relativ geringe biologische Verfügbarkeit besitzt, wird auch deren Einsatz zur Bodenverbesserung und zur dauerhaften Kohlenstoffsequestrierung beschrieben (Lehmann J. 2007. A handful of carbon. Nature 447, 143-144).

Die grundsätzliche Möglichkeit, Gärreste über eine thermochemische Karbonisierung zu Biokohle oder kohleähnlichen Produkten zu wandeln, ist in der Literatur beschrieben (Inyang et al. (2010): Biochar from anaerobically digested sugarcane bagasse. Bioresource Technology 101 (22), 8868-8872). Die Möglichkeit, basierend auf Gärresten oder unter Einbeziehung von Gärresten Bodenhilfsstoffe oder Düngemittel herstellen ist u. a. bekannt durch WO-A 2009/149944, DE-A 102007050058, DE-A 102005048116.

Durch die Einbringung von Kohlepartikeln in landwirtschaftlich genutzte Böden können vielfältige positive Effekte erzielt werden. Durch die Adsorptionswirkung der Kohlepartikel steigt die Haltefähigkeit des Bodens für Pflanzennährstoffe und Wasser (Glaser B., Haumaier L., Guggenberger G., Zech W. 2001. The Terra Preta phenomenon: a model for sustainable agriculture in the humid tropics. Naturwissenschaften, 88, 37-41). Dies ermöglicht eine bessere Versorgung des Pflanzenbestandes und damit höhere Ernteerträge. Gleichzeitig ist aufgrund der Adsorptionswirkung eine Entlastung des Grundwasserleiters u.a. von Düngemitteln, Pflanzenschutzmitteln und Schwermetallen zu erwarten. Verwendet man anstelle von fossiler Kohle eine aus biogenen Quellen technisch hergestellte Kohle (Biokohle), so kann zudem das zuvor biologisch fixierte CO₂ dauerhaft aus der Atmosphäre entfernt werden. Es entsteht eine nachhaltige C-Senke.

In Bezug auf die Herstellung von Biokohle können mehrere Verfahren unterschieden werden: Hydrothermale Karbonisierung (HTC), Pyrolyse, Torrefaction und Biomassevergasung.

Für die Durchführung einer HTC sind im Stand der Technik verschiedene Verfahren bekannt. Üblich sind Temepraturen von 180 °C bis 300 °C bei Drücken von 10 bar bis 100 bar. Die WO-A-2008/138637 beschreibt ein Verfahren und eine Vorrichtung zur hydrothermalen Karbonisierung (HTC) von Biomasse mit einer HTC-Anlage. In der WO-A-2008/113309 wird ein Verfahren zur nasschemischen Umwandlung von Biomasse durch hydrothermale Karbonisierung offenbart. EP-A-1 970 431 beschreibt eine Vorrichtung und ein Verfahren zur hydrothermalen Karbonisierung von Biomasse. WO-A-2008/095589 beschreibt die hydrothermale Karbonisierung von Biomasse, DE-A-102007062811 offenbart aus Biomasse hergestellte Werk- und/oder Brennstoffe und in der DE-U-202008012419 wird eine Vorrichtung zur Behandlung von Biomasse beansprucht.

Pyrolyseverfahren sind ebenfalls im Stand der Technik bekannt. Im Vergleich zur HTC werden deutlich höhere Temperaturen von 500 °C bis 900 °C angewandt, jedoch ohne Druckerhöhung. So wird in der DE-A-102005030096 ein Energiewandlungssystem für feste Biomasse beschrieben. Die DE-A-3531605 offenbart einen Reaktor zur Behandlung organischer Massen und Verfahren zur Erzielung mehrerer Zwischen- und Endprodukte aus diesen Massen. Verfahren und Vorrichtung zur Speicherung sowie Gewinnung von Bioenergie wird in der DE-A-3048320 offenbart und schließlich beschreibt die DE-A-3048320 ein Verfahren und eine Vorrichtung zur kombinierten Erzeugung von hochwertigen Pyrolyseölen, Biokohle und Generatorgas aus organischen Rohstoffen.

Sowohl fossile Kohle als auch die Biokohle ist im unbehandelten Zustand nur sehr bedingt für den Einsatz im Boden geeignet. Im Wesentlichen lässt sich dies auf die hohe Sorptionsfähigkeit der Kohle zurückführen, durch die die im Boden vorhandenen Pflanzennährstoffe so weit fixiert werden können, dass das Pflanzenwachstum gestört wird.

Torrefaction kann als eine milde Form der Pyrolyse betrachtet werden, mit weitaus geringeren Temperaturen von 200 bis 350°C. Es sind verschiedene Verfahren bekannt z.B. in WO-A 2005/056723 und US-A 4,553,978. Der Nachteil der Torrefaction ist ein vergleichsweise geringerer Kohlenstoffanteil im Kohleprodukt und die hierdurch tendenziell geringere Sorptionsfähigkeit sowie die leichtere biologische Abbaubarkeit. Im Ergebnis eignen sich diese Produkte eher als Brennstoff und weniger als Bodenhilfsstoff.

Die Biomassevergasung dient der Gewinnung eines gasförmigen Brennstoffs. Üblich sind Temperturen von über 700°C. Als Nebenbrodukt kann ein festes Kohleprodukt mit vergleichsweise hohem Kohlenstoffanteil entstehen. Nachteil ist jedoch die geringe Ausbeute fester Produkte, da die Gasbildung im Vordergrund steht.

In Bezug auf die Herstellung eines auf Kohle basierten Bodenverbesserungsmittels sind verschiedene Verfahren bekannt.

Aus WO-A-2000/037394 ist ein Verfahren bekannt, bei dem aus Braunkohle durch oxidierende und ammonisierende Behandlung ein organisches Düngemittel mit Huminstoffcharakter hergestellt wird. In der WO-A-2009/021528 wird ein fermentatives Verfahren zur Herstellung von humus- und nährstoffreichen sowie wasserspeichernden Ton-/Bodensubstraten unter dem Einsatz von pyrogenem Kohlenstoff beschrieben.

Beide Druckschriften beschreiben Verfahren zur Umsetzung von Kohle und anderen kohlenstoffhaltigen Ausgangsmaterialien zu Humus oder einem humusähnlichen Material. Diese Prozesse sind mit einem erheblich höheren Aufwand verbunden als die alleinige Herbeiführung einer Sättigung der Sorptionsfähigkeit. So sind gemäß der WO-A-2000/037394 hohe Temperaturen und Drücke erforderlich. Für das Verfahren gemäß der WO-A-2009/021528 sind lange Zeiträume von zwei bis sechs Wochen vorgesehen.

Nachteilig bei den vorbeschriebenen Verfahren zur Behandlung der unterschiedlichen Prozessphasen der Biogaserzeugung ist, dass diese nicht hinsichtlich ihres Zusammenspiels optimiert sind, wodurch potentielle Synergieeffekte ungenutzt bleiben.

Aufgabe der Erfindung ist es, die unterschiedlichen Stoff- und Energieströme des Biogasprozesses so zu behandeln und miteinander zu verknüpfen, dass die ökonomische Effizienz der Biogasanlage steigt.

Erfindungsgemäß wird die Aufgabe dadurch gelöst, dass nicht abgebaute organische Substanz über den Prozess der thermochemischen Karbonisierung zu einem biogenen Kohleprodukt gewandelt wird, welches direkt oder nach einer Aufbereitung als Adsorber zur Reinigung von Fluiden der Biogasanlage eingesetzt wird, wobei der entstehende Komplex aus biogener Kohle und absorbierten mineralischen und organischen Stoffen direkt oder nach einer weiteren Aufbereitung als Bodenhilfsstoff mit Düngewirkung, als geträgerter Mineraldünger oder als Kultursubstrat verwendet und vermarktet werden kann.

Die Aufgabe wird zunächst durch ein Biomasseverwertungssystem gemäß dem Hauptanspruch gelöst. Vorteilhafte Ausgestaltungen der erfindungsgemäßen Vorrichtung sind in den abhängigen Ansprüchen gekennzeichnet.

Die Aufgabe wird ferner durch ein Verfahren gemäß dem ersten Verfahrensanspruch gelöst. Vorteilhafte Ausgestaltungen des erfindungsgemäßen Verfahrens sind in den abhängigen Ansprüchen gekennzeichnet.

Hierin beschrieben wird außerdem eine mit Mineralstoffen beladene Kohle zur Verwendung als Bodenverbesserungsmittel oder zur Einbringung von Kohlepartikeln in landwirtschaftlich genutzte Böden zu Düngungszwecken.

Die Aufgabe wird also durch ein Biomasseverwertungssystem gelöst, umfassend mindestens eine Biogasanlage, mindestens eine Anlage zur Beladung von Kohlepartikeln, welche mindestens eine Zuführung für Fluide aufweist, mindestens eine Anlage zur thermochemischen Karbonisierung, wobei die Anlage zur thermochemischen Karbonisierung die Reststoffe, die aus der Biogasanlage stammen, in Biokohle umwandelt und eine Zuführungsvorrichtung für feste Medien die Biokohle in die Anlage zur Beladung von Kohlepartikeln überführt.

Erfindungsgemäß bevorzugt ist es, dass das Biomasseverwertungssystem weiterhin mindestens eine weitere Anlage aus der folgenden Liste umfasst:
- Anlage zur energetischen;
- Anlage zur Phasenseparation;
- Anlage zur Entwässerung von Kohle.

Erfindungsgemäß ist ferner bevorzugt, dass die Biogasanlage aus einphasigen Biogasanlagen oder zweiphasigen Biogasanlagen oder aus einer Kombination der genannten Biogasanlagen ausgewählt ist.

Erfindungsgemäß bevorzugt ist es, dass das Biomasseverwertungssystem weiterhin mindestens ein weiteres Bestandteil aus der folgenden Liste umfasst:
- Einspeisevorrichtung für ungereinigtes Biogas aus dem Biogasreaktor in die Anlage zur Beladung von Kohlepartikeln;
- Austragvorrichtung für die feste Phase des Biogasreaktorinhalts in die Anlage zur thermochemischen Karbonisierung;
- Austragvorrichtung für die feste Phase der Anlage zur Phasenseparation in die Anlage zur thermochemischen Karbonisierung;
- Zuführvorrichtung aus der Anlage zur thermochemischen Karbonisierung in die Anlage zur Beladung von Kohlepartikeln für feste, flüssige und/oder gasförmige Medien;
- Austragvorrichtung für beladene Biokohle aus der Anlage zur Beladung von Kohlepartikeln in die Anlage zur Entwässerung von Kohle;
- Austragvorrichtung für beladene Biokohle aus der Anlage zur Entwässerung von Kohle;
- Vorrichtung für die Zirkulation der Flüssigphase des Biogasreaktors zwischen dem Biogasreaktor und der Anlage zur Beladung von Kohlepartikeln;
- Austragvorrichtung für das Fermentationsmedium aus der Biogasanlage in eine Anlage zur Phasenseparation;
- Austragvorrichtung für flüssige und/oder gasförmige Medien aus der Anlage zur Phasenseparation in die Anlage zur Beladung von Kohlepartikeln.

Es ist erfindungsgemäß weiterhin bevorzugt, dass die Anlage zur Beladung von Kohlepartikeln aus einem im Wesentlichen zylindrischen Gefäß besteht, welches durch ein Sieb in zwei übereinander angeordnete Teilgefäße aufgeteilt ist, wobei das Teilgefäß unterhalb des Siebes zur Aufnahme der Flüssigphase vorgesehen ist und mindestens eine Zuführung für Fluide aufweist und das Teilgefäß oberhalb des Siebes zur Aufnahme der Kohlepartikel vorgesehen ist und mindestens eine Zuführung für die Kohlepartikel und mindestens eine Zuführung für Fluide aufweist. Dabei ist besonders bevorzugt, dass diese für den Austrag der Kohlepartikel eine Förderschnecke aufweist oder dass diese für die Durchmischung der Suspension der Kohlepartikel eine Rührvorrichtung aufweist und/oder dass diese gasdichte Schleusen für den Ein- und Austrag der Kohlepartikel aufweist.

Das erfindungsgemäße Verfahren wird durchgeführt, indem man die folgenden Schritte ausführt: Zuführung eines Materials, das organische Substanz enthält, in einen Biogasfermenter unter Bildung von Biogas; Entnahme von fester organischer Substanz aus dem Fermenter, gegebenenfalls durch maschinelle Entwässerung des Fermenterinhalts, thermische Behandlung der entnommenen organischen Substanz unter Bildung von Kohlepartikeln; Einbringen der Kohlepartikel in einen Reaktionsbehälter; in Kontakt bringen der Kohlepartikel mit Mineralstoffen und Huminsäuren aus fluidischen Trägern des Fermenters unter Erhalt von düngewirksamen Bodenhilfsstoffen oder geträgerten Mineraldüngern; Einbringen von Sauerstoff oder Luft in den Reaktionsbehälter unter Erhalt von getrockneten düngewirksamen Bodenhilfsstoffen, getrockneten geträgerten Mineraldüngern oder einem Kultursubstrat.

Erfindungsgemäß ist somit ein Verfahren unter Biomasseverwertung zur Herstellung von Biogas und Biokohle, wobei man Biomasse in einen Bioreaktor einbringt und in an sich bekannter Weise vergärt, das gebildete Fermentationsmedium oder Teile oder Phasen desselben und/oder das gebildete Biogas einer Anlage zur Beladung von Kohlepartikeln zuführt, um die Kohlepartikel mit Mineralstoffen zu beladen, die beladenen Kohlepartikel der Anlage zur Beladung von Kohlepartikeln entnimmt und einer weiteren Verwertung zuführt, dadurch gekennzeichnet, dass man die Kohlepartikel zuvor aus der dem Bioreaktor entnommenen festen Phase herstellt.

Das Verfahren wird durchgeführt, indem man die folgenden Schritte ausführt:
Einbringen der Kohlepartikel in einen Reaktionsbehälter;
in Kontakt bringen der Kohlepartikel mit den Mineralstoffen unter Beladen der Kohlepartikel mit den Mineralstoffen, wobei die Mineralstoffe aus einer Biogasanlage entnommen und in einem fluidischen Träger enthalten sind;
Austragen der beladenen Kohlepartikel aus dem Reaktionsbehälter; und
Entwässerung der beladenen Kohlepartikel unter Erhalt von beladenen und entwässerten Kohlepartikeln.

Bevorzugt ist dabei ein Verfahren, bei dem man die Kohlepartikel mit Mineralstoffen belädt, wobei man die Mineralstoffe
über eine in der Biogasanlage zirkulierende, weitgehend feststofffreie Flüssigphase oder
über eine aus dem feststoffhaltigen Fermentationsmedium der Biogasanlage separierte Flüssigphase oder über eine aus dem Fermentationsmedium der Biogasanlage erzeugte Gasphase oder
über das in der Biogasanlage gebildete Biogas oder über eine Kombination der genannten Schritte aus der Biogasanlage entnimmt.

Bevorzugt ist ferner ein Verfahren, bei dem man Kohlepartikel aus einer Kohle verwendet, die man durch einen thermochemischen Prozess aus organischen Materialien herstellt.

Besonders bevorzugt ist ein Verfahren, bei dem man die Kohle im Wesentlichen aus den organischen Reststoffen der Biogasanlage herstellt.

Bevorzugt ist auch ein Verfahren, bei dem man die Kohlepartikel vor dem Einbringen in den Reaktionsbehälter zerkleinert oder zu Briketts verpresst.

Ganz besonders bevorzugt ist ein Verfahren, bei dem man die zur Vorbehandlung, Beladung und/oder Nachbehandlung der Kohle benötigte Energie mittels der Biogasanlage erzeugt.

Bevorzugt ist auch ein Verfahren, bei dem man mineralstoffhaltige gasförmige und/oder flüssige Nebenprodukte der Kohleerzeugung dem Reaktionsbehälter und/oder der Biogasanlage zuführt.

Bevorzugt ist ferner ein Verfahren, bei dem man die Flüssigphase zwischen der Biogasanlage und dem Reaktionsbehälter austauscht.

Besonders bevorzugt ist auch ein Verfahren, bei dem man die beladenen Kohlepartikel im Reaktionsbehälter durch Zuführung eines Gases trocknet, welches Sauerstoff enthält und/oder das man vor der Zuführung erwärmt.

Gegenstand der vorliegenden Erfindung ist auch eine Anlage zur Beladung von Kohlepartikeln als integraler Bestandteil des erfindungsgemäßen Biomasseverwertungssystems, bestehend aus einem im Wesentlichen zylindrischen Gefäß, welches durch ein Sieb in zwei übereinander angeordnete Teilgefäße aufgeteilt ist, wobei das Teilgefäß unterhalb des Siebes zur Aufnahme der Flüssigphase vorgesehen ist und mindestens eine Zuführung für Fluide aufweist und das Teilgefäß oberhalb des Siebes zur Aufnahme der Kohlepartikel vorgesehen ist und mindestens eine Zuführung für die Kohlepartikel und mindestens eine Zuführung für Fluide aufweist.

Erfindungsgemäß bevorzugt ist eine Anlage zur Beladung von Kohlepartikeln, welche für den Austrag der Kohlepartikel eine Förderschnecke aufweist oder dass diese für die Durchmischung der Suspension der Kohlepartikel eine Rührvorrichtung aufweist.

Bevorzugt ist insbesondere eine Anlage zur Beladung von Kohlepartikeln, welche gasdichte Schleusen für den Ein- und Austrag der Kohle aufweist.

Die Aufgabe wird erfindungsgemäß auch durch ein Verfahren zur Herstellung von mit Mineralstoffen angereicherten Kohlepartikeln gelöst, wobei man Kohlepartikel mit Mineralstoffen aus einer Biogasanlage belädt.

Ein weiterer hierin beschriebener Gegenstand ist daher mit Mineralstoffen beladene Kohle, erhältlich mit einem erfindungsgemäßen Verfahren, zur Verwendung als Bodenverbesserungsmittels oder zur Einbringung von Kohlepartikeln in landwirtschaftlich genutzte Böden zu Düngungszwecken.

Die Aufgabe wird erfindungsgemäß also dadurch gelöst, dass die Kohlepartikel in Kontakt gebracht werden mit gezielt aus einer Biogasanlage ausgekoppelten düngewirksamen Mineralstoffen.

Eine erfindungsgemäße Lösung beinhaltet, dass die erforderlichen Mineralstoffe sowohl aus der Fermentationsflüssigkeit der Biogasanlage als auch aus dem in der Biogasanlage gebildeten Biogas verfügbar gemacht werden, wodurch beide Stoffe gleichzeitig gereinigt werden. Eine weitere bevorzugte Lösung sieht die Erzeugung der Kohle aus den organischen Fermentationsresten der angekoppelten Biogasanlage vor. Besonders vorteilhaft kann das Verfahren gestaltet werden, wenn die Biogasanlage eine zweiphasige Betriebsweise erlaubt. Die Gestaltung der erfindungsgemäßen Vorrichtung, nämlich des Reaktionsbehälters für die Durchführung der Beladung der Kohle, kann beispielsweise eine Kohle-Suspension oder ein Kohle-Festbett aufweisen.

Fluide im Sinne der Erfindung sind gasförmige oder flüssige Medien. Dies können beispielsweise Biogas, Abgase aus Biogasanlagen, Reaktionslösungen aus Biogaslagen, Abwässer und dergleichen sein.

### Kurze Beschreibung der Figuren

Figur 1 stellt das erfindungsgemäße Biomasseverwertungssystem in Form eines Blockbilds/Fließdiagramms dar und zeigt ein Beispiel eines Verfahrens zur Herstellung von mineralstoffangereicherten Kohlepartikeln mit dem Einsatz von biogener Kohle (Biokohle), die aus den organischen Reststoffen der Biogasanlage erzeugt wird;
Figur 2 stellt das erfindungsgemäße Biomasseverwertungssystem in Form eines Blockbilds/Fließdiagramms dar und zeigt ein Beispiel eines Verfahrens zur Herstellung von mineralstoffangereicherten Kohlepartikeln in Verbindung mit einer zweiphasigen Biogasanlage;
Figur 3 zeigt die Gestaltung des Reaktionsbehälters zur Beladung der Kohle mit Mineralstoffen in einer Variante mit einer Kohle-Suspension; und
Figur 4 zeigt die Gestaltung des Reaktionsbehälters zur Beladung der Kohle mit Mineralstoffen in einer Variante mit einem Kohle-Festbett.

### Ausführliche Beschreibung der Erfindung

Anhand der nachfolgenden Beschreibung und Bezug nehmend auf die beigefügten Figuren wird die Erfindung näher beschrieben. Es ist klar, dass die nachfolgend angegebenen bevorzugten Ausführungsformen den Schutzumfang der vorliegenden Erfindung nicht begrenzen, sondern dem Fachmann weitere Verfahrensvarianten ermöglichen, welche gleichfalls zum Gegenstand der vorliegenden Erfindung gehören.

Für das erfindungsgemäße Biomasseverwertungssystem und die Durchführung des erfindungsgemäßen Verfahrens werden verschiedene Varianten in Form von Ausführungsbeispielen beschrieben.

Zur Optimierung der Sorptionseigenschaften der Kohle und der mechanischen Stabilität kann eine Vorbehandlung hilfreich sein. Hierzu gehören unter anderem die Zerkleinerung, die Verpressung zu Briketts, die Behandlung mit Chemikalien zur Aktivierung, Dotierung oder Imprägnierung der Kohle und die Entwässerung. Vorzugsweise haben die Kohlepartikel bzw. die Kohlebriketts einen Durchmesser bzw. eine Schichtdicke, die im Mittel unter 20 mm liegt.

Die Herstellung der Biokohle erfolgt mittels aus der Biogasanlagen stammenden Reststoffen, welche in der Anlage zur thermischen Karbonisierung 16 in Biokohle umgewandelt werden und dann mittels der Zuführungsvorrichtung für feste Medien 17 aus der Karbonisierungsanlage 16 in die Anlage zur Beladung von Kohlepartikeln 1 überführt werden.

Damit die Mineralien optimal mit der Kohle in Kontakt gebracht werden können, müssen zuvor die festen partikulären Bestandteile aus der Fermentationsflüssigkeit 6 der Biogasanlage abgetrennt werden.

Dies erfolgt durch den Phasenseparator 5. Der Phasenseparator 5 trennt die Fermentationsflüssigkeit 6 in eine feste Phase sowie eine mineralstoffhaltige, flüssige oder gasförmige Phase, wobei nur die flüssige und gasförmige Phase dem Reaktionsbehälter 1 zugeführt werden.

Die Gewinnung der flüssigen Phase kann sowohl über Siebe oder Filter als auch über eine spontane oder erzwungene Sedimentation in undurchmischten Behältern bzw. Zentrifugen erfolgen. Die Konzentration der Flüssigphase an den Elementen N, P, K beträgt in der Summe vorzugsweise mehr als 100 mg/kg, während die Konzentration an abfiltrierbaren Feststoffen vorzugsweise unter 1000 mg/kg liegt.

Für die Abscheidung einer mineralienhaltigen Gasphase weist der Phasenseparator 5 einen gasdichten Behälter auf. Zur Beschleunigung des Übergangs in die Gasphase empfiehlt sich die Anwendung geeigneter Maßnahmen im Behälter. Hierzu gehören beispielsweise die Erhöhung der Temperatur, die Absenkung des Drucks, der Einsatz von pH-Wert verändernden Chemikalien sowie die Durchleitung einer Gasphase (auch als Strippung bekannt). Die Gasphase kann Luft oder Biogas sein oder auch rezirkuliertes Gas aus dem Reaktionsbehälter 1. Während sich für die Abtrennung von gasförmigem Ammoniak-Stickstoff eine Anhebung des pH-Wertes in den basischen Bereich vorzugsweise über pH 9 empfiehlt, kann die Abtrennung von gasförmigem Schwefel in der Bindungsform H₂S am effektivsten im sauren Milieu unter pH 6 erfolgen.

Neben den gezielt aus der Fermentationsflüssigkeit abgeschiedenen Mineralstoffen können für die Beladung der Biokohle zusätzlich Mineralien aus dem in der Biogasanlage gebildeten Biogas genutzt werden. Dies kann durch Einleitung des Biogases in den Bodenbereich des Reaktionsbehälters 1 auf einfache Weise erfolgen. Durch diese Gestaltung wird gleichzeitig die in der Regel für die Biogasnutzung notwendige Biogasreinigung durchgeführt, so dass der Aufwand für eine zusätzliche Reinigung entfallen kann. Bei dieser Gestaltung ist darauf zu achten, dass es sich bei 1 um einen gasdichten Behälter handelt und dass bei der eventuellen Zuleitung einer gezielt erzeugten, mineralienhaltigen Gasphase aus 5 das Biogas 8 nicht so weit mit Fremdgasbestandteilen versetzt wird, dass der gereinigte, gasförmige Energieträger 10 ein zündfähiges Gemisch darstellt. Insbesondere ist hierbei auf den Sauerstoffgehalt zu achten, der im Gas 10 unter 2 Vol.-% betragen sollte.

Eine vorzugsweise Gestaltung des Verfahrens sieht eine Entwässerung der mit Mineralstoffen beladenen Kohlepartikel vor. Dies vermindert den Transportaufwand und ermöglicht die gleichzeitige Gewinnung von aufbereitetem Überschusswasser 11, für welches innerhalb und außerhalb der Prozesskette verschiedene Verwertungsmöglichkeiten bestehen. So kann das Überschusswasser 11 beispielsweise als Reaktions- und Transportmedium in der Biogasanlage 7 eingesetzt oder zur Bewässerung landwirtschaftlicher Kulturen genutzt werden. Die Entwässerung erfolgt vorzugsweise in zwei oder mehr Schritten. Vorzugsweise wird der Reaktionsbehälter 1 für eine Teilentwässerung genutzt. Durch eingebaute Siebe und/oder eine Sedimentation der Feststoffe kann die Flüssigphase separat entnommen werden. Die vorentwässerten, beladenen Kohlepartikel 3 werden vorzugsweise in weiteren Schritten zu einer Kohle 9 mit einem Wassergehalt von unter 30 Masse-% entwässert. Dies kann in einer separaten Entwässerungsanlage 12 mit mechanischen und thermischen Entwässerungsaggregaten erfolgen. Für die mechanische Entwässerung eignen sich Zentrifugen sowie Schnecken- oder Kammerfilterpressen. Die thermische Entwässerung wird idealerweise mit der Abwärme 14 aus einer Anlage 13 zur energetischen Nutzung des gasförmigen Energieträgers 10 betrieben. Alternativ kann die gesamte Entwässerung inkl. einer thermischen Wasserabscheidung auch in Behälter 1 erfolgen. Im Gegensatz zur ersten Variante kann bei der Alternativvariante durch die thermische Entwässerung kein kontinuierlicher Prozess in Behälter 1 etabliert werden. Um das anfallende Biogas trotzdem kontinuierlich reinigen zu können, empfiehlt sich die Verwendung von mindestens zwei parallel zu betreibenden Reaktionsbehältern 1. Anstelle einer technischen Entwässerung kann die Entwässerung auch durch solaren Einfluss in Form einer einfachen Schüttung mit oder ohne Überdachung vorgenommen werden.

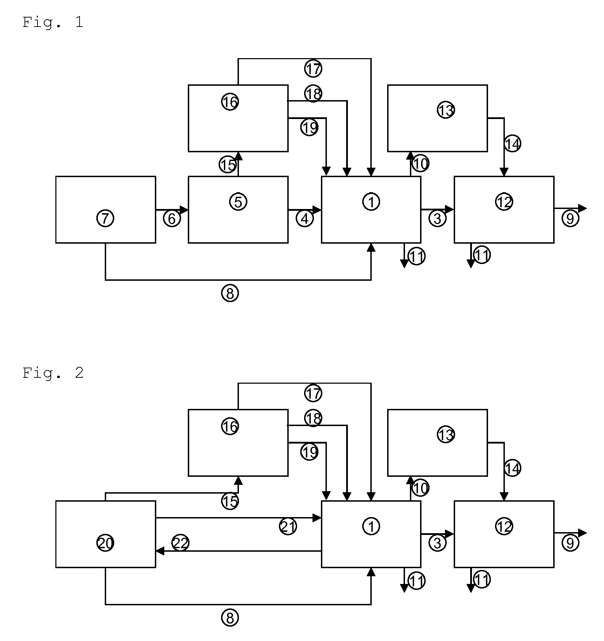

In Figur 1 ist eine bevorzugte Ausführungsform des erfindungsgemäßen Biomasseverwertungssystems und des erfindungsgemäßen Verfahrens dargestellt. Dieses Ausführungsbeispiel bezieht sich auf die Nutzung von organischen Fermentationsresten als Ausgangsmaterial der Kohle, wobei diese Fermentationsreste aus derselben Biogasanlage stammen wie die Mineralien für die Beladung der Kohle. Diese Kohle wird im Folgenden auch als Biokohle bezeichnet.

Die Nutzung von organischen Reststoffen aus einer Biogasanlage als Ausgangsmaterial der Kohle hat mehrere Vorteile.

Hierzu gehören:
- Positive Umweltbilanz: Da Biokohle aus zeitnah von Pflanzen gebundenem CO₂ gewonnen wird, kann das Gesamtverfahren eine negative CO₂-Bilanz erreichen. Dies ermöglicht eine dauerhafte Entfernung von atmosphärischem CO₂.
- Gute Verfügbarkeit: Der organische Reststoff fällt zentral an der Biogasanlage an, aus der auch die zur Kohlebeladung notwendigen Mineralien stammen.
- Höhere Wirtschaftlichkeit der Biomassenutzung: Die zusätzliche Verwertung der in der Biogasanlage nicht abgebauten organischen Substanz kann die Wirtschaftlichkeit einer rein energetischen Nutzung der zur Biogaserzeugung verwendeten Biomassen erhöhen.
- Nutzung von Synergieeffekten bei der Kohleerzeugung: Die Kohleerzeugung 16 kann verbunden sein mit dem Anfall einer Gas- und/oder Flüssigphase. Diese Phasen können im Reaktionsbehälter 1 gereinigt werden. Anfallende Überschusswärme aus der Kohleerzeugung kann zur Trocknung der beladenen Kohle verwendet werden.

Eine besonders bevorzugte Gestaltungsvariante dieses Ausführungsbeispiels ist in Fig. 1 dargestellt. Diese enthält eine Fest-/Flüssigtrennung durch eine Anlage 5. Die feste Phase wird einer Anlage zur thermochemischen Karbonisierung 16 zugeführt, während die Flüssigphase mit gelösten Mineralstoffen, wie im Beispiel gemäß Fig. 1, zur Beladung der Biokohle 17 im Reaktionsbehälter 1 dient. Neben der Biokohle 17 kann in Abhängigkeit der Gestaltung des Karbonisierungsprozesses in Anlage 16 zusätzlich eine Flüssigphase 18 und/oder eine Gasphase 19 entstehen. Beide Phasen können vorteilhaft im Reaktionsbehälter 1 gereinigt werden. Anschließend lassen sich die beiden Phasen als aufbereitetes Überschusswasser 11 bzw. gasförmiger Energieträger innerhalb oder außerhalb der Prozesskette nutzen.

Für die Karbonisierung kommen mehrere Verfahren in Betracht. Hierzu gehören die Pyrolyse und die hydrothermale Karbonisierung. Insbesondere bei der Pyrolyse kann eine vorhergehende Entwässerung der Festphase 15 hilfreich sein. Vorzugsweise sollte der Wassergehalt von 15 vor der Durchführung der Pyrolyse einen Masseanteil von unter 30 % aufweisen. Um auf entsprechende Gehalte zu kommen, empfiehlt sich die Anwendung einer thermischen Entwässerung. Hierfür kann die Anlage 12 verwendet werden, in der auch die Trocknung der beladenen Biokohle erfolgt. Vor der Zugabe der erzeugten Biokohle in Behälter 1 kann es vorteilhaft sein, die Biokohle entsprechend der obigen Beschreibung aufzubereiten. Neben den organischen Reststoffen aus einer Biogasanlage können in Anlage 16 auch weitere biogene Stoffe wie Holz, Stroh und kommunale Abfälle eingesetzt werden.

Die Entwässerung der beladenen Biokohle kann wie oben beschrieben durchgeführt werden.

In Figur 2 ist eine weitere bevorzugte alternative Ausführungsform des erfindungsgemäßen Biomasseverwertungssystems und des erfindungsgemäßen Verfahrens dargestellt. Das Ausführungsbeispiel gemäß der Fig. 2 bezieht sich auf die Nutzung von organischen Fermentationsresten als Ausgangsmaterial der Kohle, wobei diese Fermentationsreste aus derselben zweiphasigen Biogasanlage stammen wie die Mineralien für die Beladung der Kohle. Die zweiphasige Betriebsweise der Biogasanlage ist dadurch gekennzeichnet, dass in mindestens einem der biologisch aktiven Behälter der Biogasanlage neben der umzusetzenden Biomasse eine Flüssigphase zugesetzt wird, die zuvor aus einem feststoffreichen Fermentationsmedium abgetrennt wurde. Die Auftrennung des Fermentationsmediums zur Gewinnung der Flüssigphase kann dabei im Ursprungsbehälter, einem weiteren Behälter oder einer Anlage zur maschinellen Phasentrennung erfolgen. Die zweiphasige Betriebsweise der Biogasanlage bewirkt, dass eine feststoffarme Flüssigphase im System zirkuliert, die als Transportmedium zur Verlagerung unterschiedlicher prozessrelevanter Stoffe genutzt werden kann.

Die Nutzung einer zweiphasigen Biogasanlage zur Bereitstellung der notwendigen Ausgangsmaterialien zur Herstellung der mineralstoffbeladenen Kohlepartikel hat gegenüber einer einphasigen Biogasanlage mehrere Vorteile. Hierzu gehören:
- Die Biogasanlage produziert bereits einen festen organischen Reststoff. Dieser hat gegenüber dem flüssigen Fermentationsmedium einer einphasigen Biogasanlage eine höhere Energiedichte. Der energetische Aufwand für die Aufbereitung und Kohleerzeugung kann dadurch reduziert werden.
- Die Biogasanlage produziert bereits eine feststoffarme, mineralstoffreiche Flüssigphase. Im Vergleich zum feststoffreichen Fermentationsmedium einer einphasigen Biogasanlage reduziert sich der für den Einsatz zur Kohlebeladung notwendige Separationsaufwand deutlich oder entfällt ganz.
- Die zirkulierende Flüssigphase der Biogasanlage kann durch die Reinigungswirkung der Kohle kontinuierlich um solche gelöste Stoffe entlastet werden, die das Potenzial besitzen, den Prozess der Biogasbildung zu hemmen. Neben Stoffen wie Ammoniak und Schwefelwasserstoff gehören hierzu auch verschiedene organische Zwischen- oder Endprodukte des Biogasprozesses, wie langkettige Fettsäuren und Huminsäuren.
- Der Bedarf der im Biogasprozess aktiven Mikroorganismen hinsichtlich der Versorgung mit Spurenelementen kann durch entsprechende Mineralien aus der Biokohle vollständig oder teilweise gedeckt werden. Mit Hilfe der zirkulierenden Flüssigphase können die Mineralien gezielt rückgelöst und in die Biogasanlage rückgefördert werden. Der Zukauf an Spurenelementen entfällt oder wird reduziert.
- Lösliche organische Begleitstoffe der Kohleerzeugung können über die zirkulierende Flüssigphase in die Biogasanlage verlagert werden, wo sie von den Mikroorganismen abgebaut werden und dadurch die Biogasproduktion steigern. Dieses Vorgehen ist zusätzlich hilfreich, falls es sich bei den organischen Begleitstoffen um Schadstoffe wie Phenole oder PAKs handelt.

Eine bevorzugte Ausgestaltung des erfindungsgemäßen Biomasseverwertungssystems und des erfindungsgemäßen Verfahrens ist nun in Fig. 2 dargestellt. Die bevorzugte Ausgestaltung sieht vor, dass die in der zweiphasigen Biogasanlage 20 zirkulierende Flüssigphase 21 kontinuierlich mit der Flüssigphase 22 aus dem Reaktionsbehälter 1 zur Beladung der Biokohle ausgetauscht wird. Die feste Phase 15 der Biogasanlage 20 kann direkt in eine Anlage zur Kohleerzeugung 16 überführt werden. In Abhängigkeit des Verfahrens der Karbonisierung kann jedoch die Vorschaltung einer weiteren Entwässerung hilfreich sein. Dies gilt insbesondere für die Pyrolyse als Verfahren zur Kohleerzeugung. Für die Einbindung der Gas- und Flüssigphase aus der Karbonisierung in die Beladung der Biokohle und die weitere Aufbereitung der beladenen Biokohle gelten dieselben Aussagen wie in Ausführungsformen gemäß den Figuren 2 bzw. 1. Die in die Biogasanlage 20 aus dem Reaktionsbehälter 1 zu überführende Flüssigphase 22 ist in den chemischen Eigenschaften identisch mit dem aus 1 potenziell abzuführenden Überschusswasser 11. Beide Stoffen können aus 1 entsprechend den Ausführungen gemäß der Fig. 2 abgetrennt werden. Durch die Verlagerung der Flüssigphase in die Biogasanlage können überschüssige Mengen an Flüssigkeit auch an anderer Stelle aus der Biogasanlage entnommen werden.

Die gezielte Regelung der Prozesse zu Kohleerzeugung, Beladung und Austausch der zirkulierenden Flüssigkeit erlaubt es, die Flüssigphase im Reaktionsbehälter 1 so aufzubereiten, dass in der Biogasanlage 20 stets optimale Milieubedingungen für die beteiligten Mikroorganismen bestehen. So können in 1 Hemmstoffe der Biogasbildung abgeschieden werden, notwendige Spurenelemente aus der Biokohle rückgelöst und in 20 rückverlagert werden.

Bevorzugt ist ferner ein Verfahren, bei dem man die Flüssigphase zwischen der Biogasanlage und dem Reaktionsbehälter austauscht. Die Rückführung der Nebenprodukte aus der Kohleerzeugung 16 in die Biogasanlage 7, 20 ist in den Figuren 1 und 2 nicht dargestellt, ist aber erfindungsgemäß bevorzugt, wenn es sich hierbei um eine Flüssigkeit (Abwasser) mit organischer Belastung handelt. Dies ist insbesondere für das Abwasser der HTC 16 zu erwarten.

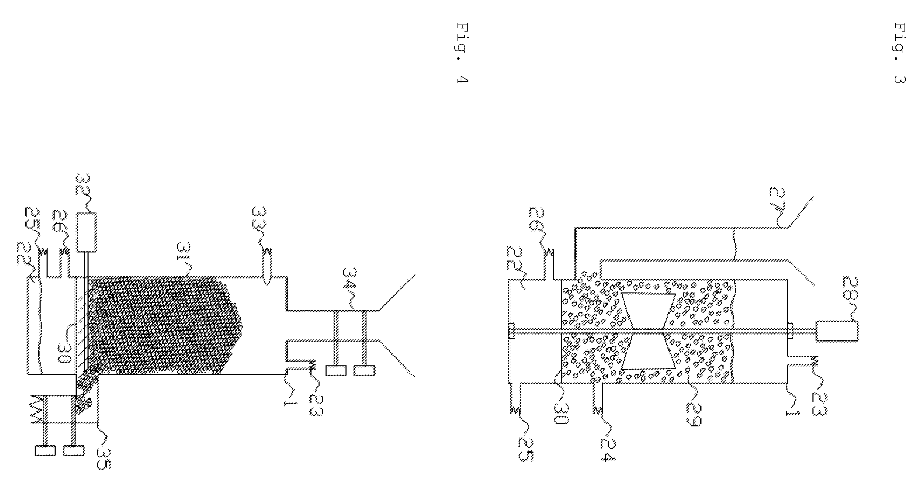

Figur 3 zeigt eine beispielhafte Gestaltung des Reaktionsbehälters 1 zur Beladung der Kohlepartikel mit Mineralstoffen. Im Behälter 1 wird eine Kohle-Suspension 29 erzeugt. Diese Variante ist vorteilhaft, wenn in erster Linie Flüssigkeiten und nicht Gase behandelt werden sollen oder größere Schwankungen hinsichtlich der Eigenschaften der Kohle sowie der zugeführten Flüssigkeiten zu erwarten sind.

Wie in Fig. 3 dargestellt, können über den Einspülschacht 27 sowohl die Kohle als auch Flüssigkeiten kontinuierlich zugeführt werden. Ist die zuzuführende Flüssigphase ausreichend frei von Feststoffen, so wird diese jedoch, wenn sie nicht zum Einspülen der Kohle benötigt wird, vorzugsweise über Stutzen 25 am Boden zugeführt. Hierdurch kann gleichzeitig die Durchmischung des Behälterinhalts gefördert werden, ohne zusätzlich Energie aufzuwenden.

Ein Sieb 30 trennt die flüssige Phase 22 des Behälterinhalts ab. Die Flüssigphase kann über Stutzen 25 entnommen werden. Ein aufkonzentriertes bzw. vorentwässertes Gemisch aus beladener Kohle und Flüssigkeit kann über Stutzen 24 ausgetragen werden. Die Gasphase wird über Stutzen 23 entnommen. Die Durchmischung des Behälterinhalts wird vorzugsweise durch einen Rührer unterstützt. Es ist jedoch auch möglich, dass die Durchmischung mit Hilfe des über Stutzen 26 eingeleiteten Gases oder der über Stutzen 25 zugeführten Flüssigkeit einen ausreichenden Effekt erzielt, insbesondere dann, wenn Teile der beiden Stoffe aus dem Reaktorkopf wieder in den Reaktorboden rückgeführt werden. Bei der Zirkulierung der Flüssigphase ist darauf zu achten, dass diese vor der Entnahme aus dem Reaktorkopf weitgehend frei von Kohlepartikeln ist. Dies kann durch Installation eines weiteren Siebs im Kopfbereich oder durch Nutzung der Schwerkraftsedimentation erfolgen.

Eine thermische Entwässerung der beladenen Kohle ist beispielsweise möglich, indem nach der vollständigen Entnahme der Flüssigphase 22 ein Gas von unten über den Stutzen 26 durch die Kohle geleitet und über Stutzen 23 wieder ausgetragen wird. Es ist dabei möglich, dass die für die thermische Entwässerung erforderliche Erwärmung des Gases durch exotherme Prozesse im Reaktionsbehälter selbst erfolgt. Ein exothermer Prozess ist auf einfache Weise durch die Zuführung von Luft zu erreichen. So ist davon auszugehen, dass die aus der Biogasanlage stammenden und in den Reaktionsbehälter überführten Gase und Flüssigkeiten Mikroorganismen enthalten, die sich auf der Kohle anlagern und in der Lage sind, leicht biologisch abbaubare Bestandteile der Kohle bei Anwesenheit von Sauerstoff in Wärme und CO₂ umzusetzen. Die Minderung der Kohle um den leicht biologisch abbaubaren Bestandteil beeinträchtigt die Effizienz des Gesamtprozesses nicht, da diese Bestandteile auch im Boden relativ schnell abgebaut werden. Die nachhaltige Funktion als Bodenverbesserungsmittel erhält die Kohle aufgrund ihrer schwer abbaubaren Bestandteile.

Außer in den Zeiten der thermischen Entwässerung kann der Reaktionsbehälter 1 kontinuierlich betrieben werden. Durch die interne Phasenseparation besteht die Möglichkeit, die Aufenthaltszeit der flüssigen Phase und der Kohle weitgehend unabhängig voneinander einzustellen. Vorzugsweise verbleibt die Kohle eine längere Zeit im Behälter 1 als die Flüssigphase. In Abhängigkeit der Beschaffenheit von Kohle und Flüssigkeit, den weiteren Prozessbedingungen und den gewünschten Ergebnissen ist zu erwarten, dass die optimale Aufenthaltszeit für die Kohle 6 bis 72 h und für die Flüssigphase 5 bis 60 min beträgt. Durch ein Umpumpen von Teilen der Gasphase im Reaktionsbehälter kann auch die Kontaktzeit von Gas und Suspension variiert werden. Ein ausreichend intensiver Kontakt sollte jedoch vorzugsweise dadurch sichergestellt werden, dass das Sieb 30 oder ein separates Düsensystem (nicht dargestellt) ein feinperliges Aufsteigen des Gases ermöglicht.

Der Prozess der Mineralstoffbeladung kann durch Optimierung der Prozessbedingungen beschleunigt werden. Neben einer homogenen Verteilung der am Prozess beteiligten Stoffe ist zu erwarten, dass auch durch höhere Temperaturen eine beschleunigte Adsorption erzielt wird. Eine Aufheizung des Behälterinhalts kann erreicht werden, indem in diesem direkt Heizaggregate eingebaut werden, aufgrund der Konvektion vorzugsweise am Boden, und/oder indem eine zuzuführende Flüssig- oder Gasphase außerhalb des Behälters 1 erwärmt wird und/oder indem noch heiße Kohle aus einer Anlage zur thermochemischen Karbonisierung eingebracht wird.

Durch gezielte Beeinflussung der Prozessbedingung ist es möglich, eine selektive Beladung der Biokohle mit bestimmten Mineralien zu erhalten. Einfluss auf die Selektivität des Prozesses hat insbesondere der pH-Wert. Der pH-Wert kann sowohl über die gezielte Bemessung der Zudosierung der unterschiedlichen zu behandelnden Flüssig- und Gasphasen beeinflusst werden als auch über die Zugabe basischer oder saurer Chemikalien. Für den Fall, dass wie in der Ausführungsform gemäß Fig. 3 eine Rückführung der Flüssigphase 22 in die Biogasanlage vorgesehen ist, kann der Einfluss des pH-Werts auf die Bindungsstärke von Kohle und Mineralien auch dazu genutzt werden, gezielt die für den Biogasprozess benötigen Spurenelemente aus der Kohle zu lösen und in die Biogasanlage rückzuverlagern.

Grundsätzlich ist es möglich, mehrere Reaktionsbehälter in Reihe oder parallel zu betreiben. Durch einen kaskadenförmigen Aufbau und/oder eine Variation der Prozessbedingungen kann die Kohle dadurch selektiv mit unterschiedlichen Mineralstoffen beladen werden.

Eine Steuerung oder Regelung des Prozesses der Kohlebeladung kann auf verschiedenen Messgrößen basieren. Hierzu zählen vor allem der pH-Wert und die elektrische Leitfähigkeit der Flüssigphase, die Rückschlüsse auf die Konzentration an Mineralien ermöglichen. Aber auch die optischen Eigenschaften der Flüssigphase können Rückschlüsse auf die Konzentration der verschiedenen Inhaltsstoffe zulassen. Um Aussagen über den Grad der Beladung der Kohle zu erhalten, können verschiedene elektrochemische Messverfahren angewendet werden. Auch die Nutzung von Sensoren zur Bestimmung der optischen Eigenschaften der Partikeloberfläche kann zielführend sein.

Eine alternative Variante der Behältergestaltung zeigt Figur 4. Erlauben die Kohlepartikel und die zu behandelnde Flüssigphase den Aufbau sowie die dauerhafte und gleichmäßige Durchströmung eines Kohle-Festbetts 31, so kann ein entsprechender Festbett-Reaktionsbehälter betrieben werden. In der in Fig. 4 dargestellten Ausführungsform wird die Flüssigphase nicht aufgestaut, so dass die Poren des Festbetts hauptsächlich gasgefüllt sind. Aufgrund des intensiveren Kontakts eignet sich diese Variante insbesondere dann, wenn die Mineralien für die Kohlebeladung im Wesentlichen über Gase zugeführt werden sollen. Um Verstopfungen des Festbetts zu vermeiden, muss auf eine weitgehende Feststofffreiheit einer ggf. zuzuführenden Flüssigphase geachtet werden.

Die unbeladenen Kohlen werden von oben über eine gasdichte Schleuse 34 zugeführt. Die beladene Biokohle wird am Behälterboden über eine Austragsschnecke 32 sowie eine gasdichte Schleuse 35 ausgetragen. Einzubringende Flüssigkeiten werden über den Stutzen 33 mit integrierter Düse gleichmäßig über den Querschnitt des Behälters appliziert. Das unterhalb der Schnecke 32 angeordnete Sieb 30 trennt wie im Reaktor gemäß Fig. 3 die Flüssigphase ab. Die Flüssigphase wird anschließend über Stutzen 25 entnommen. Das mineralstoffhaltige Gas wird über Stutzen 26 zugeleitet und nach der Durchströmung des Festbetts über Stutzen 23 wieder ausgetragen. Wie in der Ausführungsform gemäß Fig. 3 kann eine bei Bedarf unterhalb des Siebs zugeführte Flüssigkeit zur Behebung oder Prävention einer Siebverstopfung genutzt werden. Eine thermische Entwässerung der beladenen Kohle ist beispielsweise möglich, indem, entsprechend Fig. 3, Luft zugeführt wird. Diese wird in Fig. 4 von unten über Stutzen 26 durch die Kohle geleitet und über Stutzen 23 wieder ausgetragen.

Außer in den Zeiten der thermischen Entwässerung kann der Reaktionsbehälter 1 kontinuierlich betrieben werden. Der Aufbau in Fig. 4 erlaubt durch die Bemessung von Zugabe und Entnahme eine unabhängige Einstellung der Verweilzeiten von Kohle und Gas. Die Kontaktzeit der Flüssigphase im Festbett kann über ein Umpumpen verlängert werden. In Abhängigkeit der Beschaffenheit von Kohle und Gasphase, den weiteren Prozessbedingungen und den gewünschten Ergebnissen ist zu erwarten, dass die optimale Aufenthaltszeit für die Kohle 6 und 72 h und die optimale Kontaktzeit für die Gasphase 0,1 bis 30 Sekunden beträgt.

Der Prozess der Mineralstoffbeladung kann durch Optimierung der Prozessbedingungen beschleunigt werden. Neben einer gleichmäßigen Durchleitung der Gas- und Flüssigphase durch das Festbett ist zu erwarten, dass auch durch höhere Temperaturen eine beschleunigte Adsorption erreicht wird. Eine Aufheizung des Behälterinhalts kann erreicht werden, indem in diesem direkt Heizaggregate eingebaut werden und/oder indem eine zuzuführende Flüssig- oder Gasphase außerhalb des Behälters 1 erwärmt wird und/oder indem die noch heiße Kohle aus einer Anlage zur thermochemischen Karbonisierung eingebracht wird.

In Bezug auf die Optimierung und Regelung des Prozess der Biokohlebeladung treffen dieselben Aussagen zu wie in der Ausführungsform gemäß Fig. 3.

Es ist klar, dass in einem erfindungsgemäßen Biomasseverwertungssystem zwei oder mehr Anlagen zur Beladung von Kohlepartikeln vorgesehen sein können. Dabei ist es vorteilhaft, die Anlagen gemäß den Figuren 3 und 4 zu kombinieren. So ist es möglich, die Kohlepartikel sowohl in Suspension als auch im Festbett zu beladen.

Für zwei Versuche zur generellen Eignung von biogener Kohle zur Sorption von Mineralien aus Biogasanlagen wurde die mineralischen Stoffe NH₄, PO₄ und KCl in unterschiedlichen Konzentrationen gemeinsam mit Wasser in Lösung gebracht. In Versuch 1 besaß die Lösung in Bezug auf die Elemente N, P, K jeweils eine Konzentration von etwa 1000 mg/L, in Versuch 2 von 500 mg/L. Die beiden Lösungen wurden durch Sorptionssäulen mit enthaltenen biogenen Kohlepartikeln geleitet. Anschließend wurde die adsorbierte Menge an N, P, K je Gramm trockener Kohle bestimmt. In Versuch 1 waren dies 11 mg/g, 42 mg/g bzw. 33 mg/g. In Versuch 2 wurden 3 mg/g, 12 mg/g bzw. 5 mg/g gemessen. Somit wurde hinsichtlich der drei verwendeten Mineralen eine Sorptionsfähigkeit von biogener Kohle nachgewiesen.

### Bezugszeichenliste

- 1: Reaktionsbehälter zur Beladung der Kohlepartikel
- 3: beladene und vorentwässerte Kohle
- 4: Mineralstoffe im flüssigen oder gasförmigen Medium
- 5: Anlage zur Phasenseparation
- 6: Fermentationsmedium
- 7: Biogasanlage
- 8: unaufbereitetes Biogas
- 9: beladene und entwässerte Kohle
- 10: gereinigter, gasförmiger Energieträger
- 11: Überschusswasser
- 12: Anlage zur Entwässerung der beladenen Kohle
- 13: Anlage zur energetischen Biogasnutzung
- 14: Wärme
- 15: feste Phase des Fermenterinhalts
- 16: Anlage zur thermochemischen Karbonisierung
- 17: Kohle biogenen Ursprungs (Biokohle)
- 18: Flüssigphase der Karbonisierung
- 19: Gasphase der Karbonisierung
- 20: zweiphasige Biogasanlage
- 21: zirkulierende Flüssigphase aus (20)
- 22: Flüssigphase des Reaktionsbehälters
- 23: Stutzen zur Gasabführung
- 24: Stutzen zur Entnahme von beladener Kohle
- 25: Stutzen zur Abführung der flüssigen Phase des Reaktorinhalts (22)
- 26: Stutzen zur Gaszuführung
- 27: Einspülschacht für unbeladene Kohle
- 28: Rührer
- 29: Kohle-Suspension
- 30: Sieb
- 31: Kohle-Festbett
- 32: Kohle-Austragsschnecke
- 33: Zuführung von Flüssigkeit mit Düse zur horizontalen Vergleichmäßigung der Applikation
- 34: Zuführschacht für unbeladene Kohle mit gasdichter Schleuse
- 35: Austragsschacht für beladene Kohle mit gasdichter Schleuse

## Patentansprüche

1. Biomasseverwertungssystem, umfassend mindestens eine Biogasanlage (7, 20), mindestens eine Anlage zur Beladung von Kohlepartikeln (1), welche mindestens eine Zuführung für Fluide aufweist, mindestens eine Anlage zur thermochemischen Karbonisierung (16), wobei die Anlage zur thermochemischen Karbonisierung (16) die Reststoffe, die aus der Biogasanlage (7, 20) stammen, in Biokohle umwandelt und eine Zuführungsvorrichtung für feste Medien (17) die Biokohle in die Anlage zur Beladung von Kohlepartikeln (1) überführt.

2. Biomasseverwertungssystem, gemäß Anspruch 1, **dadurch gekennzeichnet, dass** diese weiterhin mindestens eine weitere Anlage aus der folgenden Liste umfasst:
- Anlage zur energetischen Biogasnutzung (13) des gasförmigen Energieträgers (10), um die entstandene Abwärme (13) für das Betreiben der thermischen Entwässerung zu verwenden;
- Anlage zur Phasenseparation (5) der Fermentationsflüssigkeit (6) der Biogasanlage (7, 20) in eine feste und eine mineralstoffhaltige flüssige oder gasförmige Phase;
- Anlage zur Entwässerung von Kohle (12), um den Wassergehalt der vorentwässerten, beladenen Kohlepartikel (3) aus dem Reaktionsbehälter (1) zu reduzieren.

3. Biomasseverwertungssystem, gemäß mindestens einem der voranstehenden Ansprüche, **dadurch gekennzeichnet, dass** die Biogasanlage aus einphasigen Biogasanlagen (7) oder zweiphasigen Biogasanlagen (20) oder aus einer Kombination der genannten Biogasanlagen ausgewählt ist.

4. Biomasseverwertungssystem, gemäß mindestens einem der voranstehenden Ansprüche, **dadurch gekennzeichnet, dass** diese weiterhin mindestens ein weiteres Bestandteil aus der folgenden Liste umfasst:
- Einspeisevorrichtung (8) für ungereinigtes Biogas aus dem Biogasreaktor (7, 20) in die Anlage zur Beladung von Kohlepartikeln (1);
- Austragvorrichtung (15) für die feste Phase des Biogasrektorinhalts in die Anlage zur thermochemischen Karbonisierung (16);
- Austragvorrichtung (15) für die feste Phase der Anlage zur Phasenseparation (5) in die Anlage zur thermochemischen Karbonisierung (16);
- Zuführvorrichtung (17, 18, 19) aus der Anlage zur thermochemischen Karbonisierung (16) in die Anlage zur Beladung von Kohlepartikeln (1) für feste (17), flüssige (18) und/oder gasförmige (19) Medien;
- Austragvorrichtung (3) für beladene Biokohle aus der Anlage zur Beladung von Kohlepartikeln (1) in die Anlage zur Entwässerung von Kohle (12);
- Austragvorrichtung (9) für beladene Biokohle aus der Anlage zur Entwässerung von Kohle (12);
- Vorrichtung (21, 22) für die Zirkulation der Flüssigphase des Biogasreaktors (20) zwischen dem Biogasreaktor (20) und der Anlage zur Beladung von Kohlepartikeln (1);
- Austragvorrichtung (6) für das Fermentationsmedium aus der Biogasanlage (7) in eine Anlage zur Phasenseparation (5);
- Austragvorrichtung (4) für flüssige und/oder gasförmige Medien aus der Anlage zur Phasenseparation (5) in die Anlage zur Beladung von Kohlepartikeln (1).

5. Biomasseverwertungssystem, gemäß mindestens einem der voranstehenden Ansprüche, **dadurch gekennzeichnet, dass** die Anlage zur Beladung von Kohlepartikeln (1) aus einem im Wesentlichen zylindrischen Gefäß (1) besteht, welches durch ein Sieb (30) in zwei übereinander angeordnete Teilgefäße aufgeteilt ist, wobei das Teilgefäß unterhalb des Siebes (30) zur Aufnahme der Flüssigphase (22) vorgesehen ist und mindestens eine Zuführung (25, 26) für Fluide aufweist und das Teilgefäß oberhalb des Siebes (30) zur Aufnahme der Kohlepartikel (17) vorgesehen ist und mindestens eine Zuführung (27, 34) für die Kohlepartikel (17) und mindestens eine Zuführung (23, 24, 33) für Fluide aufweist.

6. Biomasseverwertungssystem gemäß Anspruch 5, **dadurch gekennzeichnet, dass** diese für den Austrag der Kohlepartikel (17) eine Förderschnecke aufweist oder dass diese für die Durchmischung der Suspension der Kohlepartikel (17) eine Rührvorrichtung aufweist und/oder dass diese gasdichte Schleusen für den Ein- und Austrag der Kohlepartikel aufweist.

7. Verfahren unter Biomasseverwertung zur Herstellung von Biogas und Biokohle, wobei man Biomasse in einen Bioreaktor einbringt und in an sich bekann-ter Weise vergärt, das gebildete Fermentationsmedium oder Teile oder Phasen desselben und/oder das gebil-dete Biogas einer Anlage zur Beladung von Kohleparti-keln zuführt, um die Kohlepartikel mit Mineralstoffen zu beladen, die beladenen Kohlepartikel der Anlage zur Beladung von Kohlepartikeln entnimmt und einer weiteren Verwertung zuführt, **dadurch gekennzeichnet, dass** man die Kohlepartikel zuvor aus der dem Bioreaktor entnommenen festen Phase herstellt.

8. Verfahren gemäß Anspruch 7, **dadurch gekennzeichnet, dass** man die folgenden Schritte ausführt:
Einbringen der Kohlepartikel (17) in einen Reaktionsbehälter (1);
in Kontakt bringen der Kohlepartikel (17) mit den Mineralstoffen (4) unter Beladen der Kohlepartikel mit den Mineralstoffen (4), wobei die Mineralstoffe (4) aus einer Biogasanlage (7) entnommen und in einem fluidischen Träger (4, 8) enthalten sind;
Austragen der beladenen Kohlepartikel (3) aus dem Reaktionsbehälter (1); und
Entwässerung der beladenen Kohlepartikel (3) unter Erhalt von beladenen und entwässerten Kohlepartikeln (9).

9. Verfahren gemäß Anspruch 7 oder 8, **dadurch gekennzeichnet, dass** man die Kohlepartikel (17) mit Mineralstoffen (4) belädt, wobei man die Mineralstoffe (4)
über eine in der Biogasanlage (7, 20) zirkulierende, weitgehend feststofffreie Flüssigphase(21, 22) oder über eine aus dem feststoffhaltigen Fermentationsmedium (6) der Biogasanlage (7, 20) separierte Flüssigphase (4) oder
über eine aus dem Fermentationsmedium der Biogasanlage (7) erzeugte Gasphase (4) oder
über das in der Biogasanlage (7, 20) gebildete Biogas (8) oder
über eine Kombination der genannten Schritte aus der Biogasanlage (7, 20) entnimmt.

10. Verfahren gemäß einem der voranstehenden Ansprüche 7 bis 9, **dadurch gekennzeichnet, dass** man Kohlepartikel (17) im Wesentlichen aus den organischen Reststoffen der Biogasanlage (7) herstellt.

11. Verfahren gemäß einem der voranstehenden Ansprüche 7 bis 10, **dadurch gekennzeichnet, dass** man die zur Vorbehandlung, Beladung und/oder Nachbehandlung der Kohlepartikel (3) benötigte Energie mittels der Biogasanlage (7) erzeugt.

## Claims

1. Biomass utilisation system, comprising at least one biogas plant (7, 20), at least one plant for the charging of carbon particles (1) which has at least one feed for fluids, at least one plant for the thermochemical carbonation (16), wherein the plant for thermochemical carbonation (16) converts the residues originating from the biogas plant (7, 20) into biochar and a feeding device for solid media (17) that transfers biochar to the plant for the charging of carbon particles (1).

2. Biomass utilisation system, according to claim 1, **characterised in that** it further comprises at least one plant of the following list:
- Plant for the energetic biogas utilisation (13) of the gaseous energy carrier (10), in order to use the waste heat produced (13) for running the thermal dewatering;
- Plant for phase separation (5) of the fermentation liquid (6) of the biogas plant (7, 20) into a solid and a mineral-containing liquid or gaseous phase;
- Plant for the dewatering of carbon (12) in order to reduce the water content of the pre-dewatered charged carbon particles (3) from the reaction vessel (1).

3. Biomass utilisation system, according to at least one of the foregoing claims, **characterised in that** the biogas plant is selected from single-phase biogas plants (7) or two-phase biogas plants (20) or from a combination of the biogas plants mentioned.

4. Biomass utilisation system, according to at least one of the foregoing claims, **characterised in that** it further comprises at least one further element from the following list:
- Feeding device (8) for uncleaned biogas from the biogas reactor (7, 20) into the plant for the charging of carbon particles (1);
- Discharger (15) for the solid phase of the biogas reactor contents into the plant for thermochemical carbonation (16);
- Discharger (15) for the solid phase of the plant for phase separation into the plant for thermochemical carbonation (16);
- Feeding device (17, 18, 19) for solid (17), liquid (18) and/or gaseous (19) media from the plant for thermochemical carbonation (16) into the plant for charging carbon particles (1);
- Discharger (3) for charged biochar from the plant for charging carbon particles (1) into the plant for dewatering of carbon (12);
- Discharger (9) for charged biochar from the plant for dewatering of carbon (12);
- Device (21, 22) for the circulation of the liquid phase of the biogas reactor (20) between the biogas reactor (20) and the plant for charging of carbon particles (1)
- Discharger (6) for the fermentation medium from the biogas plant (7) into a plant for phase separation (5)
- Discharger (4) for liquid and/or gaseous media from the phase separation plant (5) into the plant for the charging of carbon particles (1).

5. Biomass utilisation system, according to at least one of the foregoing claims, **characterised in that** the plant for charging carbon particles (1) comprises essentially a cylindrical vessel (1) which is split by a strainer (30) into two part-vessels, one above the other, wherein the part-vessel underneath the strainer (30) is provided to receive the fluid phase (22) and has at least one feed (25, 26) for fluids and the part-vessel above the strainer (30) is provided to receive the carbon particles (17) and has at least one feed (27, 34) for the carbon particles (17) and at least one feed (23, 24, 33) for fluids.

6. Biomass utilisation system, according to claim 5, **characterised in that** it has a screw conveyor for the discharge of the carbon particles (17) or that it has a stirring device for the mixing of the carbon particle (17) suspension and/or that it has gas-tight locks for the entry and discharge of the carbon particles.

7. Method using biomass utilisation for the production of biogas and biochar, wherein one introduces biomass into a bioreactor and ferments it in a well-known way, the fermentation medium generated, or parts or phases of the same, and/or the biogas generated is fed to a plant for charging carbon particles in order to charge the carbon particles with minerals, takes the charged carbon particles from the plant for charging carbon particles and feeds to a further utilisation, **characterised in that** the carbon particles have been previously produced from the solid phase of the bioreactor.

8. Method, according to claim 7, **characterised in that** the following steps are performed:
Introducing the carbon particles (17) into a reaction vessel (1);
Contacting the carbon particles (17) with the minerals (4) by charging the carbon particles with the minerals (4), wherein the minerals (4) are taken from a biogas plant (7) and are contained in a fluid transport medium (4, 8);
Discharging of the charged carbon particles (3) from the reaction vessel (1); and
De-watering of the charged carbon particles (3) and so obtaining the charged and de-watered carbon particles (9).

9. Method, according to claim 7 or 8, **characterised in that** the carbon particles (17) are charged with minerals (4), wherein the minerals (4) are removed from the biogas plant (7, 20) via a largely solid-free liquid phase (21, 22) circulating in the biogas plant (7, 20) or
via a liquid phase (4) separated from the solid-containing fermentation medium (6) of the biogas plant (7, 20) or
via a gas phase (4) produced by the fermentation medium of the biogas plant (7) or
via the biogas (8) generated in the biogas plant (7, 20) or
via a combination of the steps mentioned.

10. Method, according to one of the foregoing claims 7 to 9, **characterised in that** the carbon particles (17) are essentially produced from the organic residues of the biogas plant (7).

11. Method, according to one of the foregoing claims 7 to 10, **characterised in that** the energy required for the pre-treatment, charging and/or posttreatment of the carbon particles (3) is produced by means of the biogas plant (7).

## Revendications

1. Système d'utilisation de biomasse, comprenant au moins une installation de biogaz (7, 20), au moins une installation de chargement de particules de charbon (1) pourvue d'au moins une conduite d'amenée pour fluides, au moins une installation de carbonisation thermochimique (16), ladite installation de carbonisation thermochimique (16) transformant en bio-charbon les matières résiduelles provenant de l'installation de biogaz (7, 20), et un dispositif d'amenée pour milieux solides (17) qui transfère le bio-charbon vers l'installation de chargement de particules de charbon (1).

2. Système d'utilisation de biomasse selon la revendication 1, **caractérisé en ce que** celui-ci comprend en outre au moins une autre installation sélectionnée dans la liste suivante:
- installation d'exploitation énergétique du biogaz (13) de ressource énergétique gazeuse (10), pour utiliser la chaleur perdue (13) généré pour le fonctionnement de la déshydratation thermique;
- installation de séparation de phases (5) du liquide de fermentation (6) de l'installation de biogaz (7, 20), en une phase solide et une phase liquide ou gazeuse contenant des substances minérales;
- installation de déshydratation de charbon (12), permettant de réduire la teneur en eau des particules de charbon (3) pré-déshydratées chargées du conteneur de réaction (1).

3. Système d'utilisation de biomasse selon au moins une des revendications précédentes, **caractérisé en ce que** l'installation de biogaz est sélectionnée entre des installations de biogaz à une seule phase (7) ou des installations de biogaz à deux phases (20) ou une combinaison desdites installations de biogaz.

4. Système d'utilisation de biomasse selon au moins une des revendications précédentes, **caractérisé en ce que** celui-ci comprend en outre au moins un autre élément sélectionné dans la liste suivante:
- dispositif d'alimentation (8) pour biogaz non purifié du réacteur à biogaz (7, 20) vers l'installation de chargement de particules de charbon (1);
- dispositif de décharge (15) pour la phase solide du contenu du réacteur à biogaz vers l'installation de carbonisation thermochimique (16);
- dispositif de décharge (15) pour la phase solide de l'installation de séparation de phases (5) vers l'installation de carbonisation thermochimique (16);
- dispositif d'amenée (17, 18, 19) de l'installation de carbonisation thermochimique (16) vers l'installation de chargement de particules de charbon (1) pour milieux solides (17), liquides (18) et/ou gazeux (19);
- dispositif de décharge (3) pour le bio-charbon chargé, de l'installation de chargement de particules de charbon (1) vers l'installation de déshydratation du charbon (12);
- dispositif de décharge (9) pour le bio-charbon chargé, hors de l'installation de déshydratation de charbon (12);
- dispositif (21, 22) de circulation de la phase liquide du réacteur à biogaz (20) entre le réacteur à biogaz (20) et l'installation de chargement de particules de charbon (1);
- dispositif de décharge (6) pour le milieu de fermentation de l'installation de biogaz (7) vers une installation de séparation de phases (5);
- dispositif de décharge (4) pour milieux liquides et/ou gazeux, de l'installation de séparation de phases (5) vers l'installation de chargement de particules de charbon (1).

5. Système d'utilisation de biomasse, selon au moins une des revendications précédentes, **caractérisé en ce que** l'installation de chargement de particules de charbon (1) se compose d'un récipient (1) essentiellement cylindrique divisé par un tamis (30) en deux parties de récipient superposées, la partie de récipient sous le tamis (30) étant prévue pour recueillir la phase liquide (22) et comprenant au moins une conduite d'amenée (25, 26) pour fluides, et la partie de récipient au-dessus du tamis (30) étant prévue pour recueillir les particules de charbon (17) et comprenant au moins une conduite d'amenée (27, 34) pour les particules de charbon (17) et au moins une conduite d'amenée (23, 24, 33) pour fluides.

6. Système d'utilisation de biomasse, selon la revendication 5, **caractérisé en ce que** celui-ci comprend une vis transporteuse pour le déchargement des particules de charbon (17), ou **en ce que** celui-ci comprend un dispositif agitateur pour le mélange de la suspension des particules de charbon (17) et/ou **en ce que** celui-ci comprend des sas étanches aux gaz pour le chargement et la déchargement des particules de charbon.

7. Procédé utilisant l'utilisation de biomasse pour la production de biogaz et de bio-charbon, où on charge la biomasse dans un bioréacteur et fermente de manière connue en soi, le milieu de fermentation formé, ou des parties ou des phases de celui-ci et/ou le biogaz formé sont conduits vers une installation de chargement de particules de charbon pour charger les particules de charbon en substances minérales, les particules de charbon chargées sont extraites de l'installation de chargement de particules de charbon et conduites vers une autre utilisation, **caractérisé en ce que** les particules de charbon sont préalablement produites à partir de la phase solide extraite du bioréacteur.

8. Procédé, selon la revendication 7, **caractérisé en ce que** les étapes suivantes sont exécutées:
chargement des particules de charbon (17) dans un conteneur de réaction (1);
mise en contact les particules de charbon (17) avec les substances minérales (4) avec chargement les particules de charbon en substances minérales (4), lesdites substances minérales (4) étant extraites d'une installation de biogaz (7) et contenues dans un porteur fluide (4, 8);
déchargement les particules de charbon (3) chargées du conteneur de réaction (1); et
déshydratation des particules de charbon (3) chargées, des particules de charbon (9) chargées et déshydratées étant obtenues .

9. Procédé, selon la revendication 7 ou 8, **caractérisé en ce que** les particules de charbon (17) sont chargées de substances minérales (4), les substances minérales (4) étant extraites de l'installation de biogaz (7, 20)
au moyen d'une phase liquide (21, 22) circulant dans l'installation de biogaz (7, 20), pratiquement exempte de matières solides ou au moyen d'une phase liquide (4) séparée du milieu de fermentation (6) à teneur en matières solides de l'installation de biogaz (7, 20), ou
au moyen d'une phase gazeuse (4) générée à partir du milieu de fermentation de l'installation de biogaz (7), ou
au moyen du biogaz (8) formé dans l'installation de biogaz (7, 20) ou au moyen d'une combinaison des étapes susmentionnées.

10. Procédé, selon l'une des revendications précédentes 7 à 9, **caractérisé en ce que** les particules de charbon (17) sont produites essentiellement à partir des matières résiduelles organiques de l'installation de biogaz (7).

11. Procédé, selon l'une des revendications précédentes 7 à 10, **caractérisé en ce que** l'énergie exigée pour le traitement préalable, le chargement et/ou le traitement consécutif des particules de charbon (3) est générée au moyen de l'installation de biogaz (7).
